# EUROPÄISCHE PATENTSCHRIFT

(11) **EP 1 147 871 B1**
(45) Veröffentlichungstag und Bekanntmachung des Hinweises auf die Patenterteilung: **06.08.2003**
(21) Anmeldenummer: 01107840.9
(22) Anmeldetag: 09.04.2001
(51) Int. Cl.: B29C 45/16

(54) **Werkzeug zum Spritzgiessen von Zahnbürsten**
Mould for injection moulding tootbrushes
Moule pour mouler par injection des brosses à dents

(30) Priorität: 20.04.2000 DE 20007304 U
(43) Veröffentlichungstag der Anmeldung: 24.10.2001
(73) Patentinhaber: G.B. BOUCHERIE, N.V., 8870 Izegem (BE)
(72) Erfinder: Boucherie, Bart Gerard, 8870 Izegem (BE)
(74) Vertreter: Degwert, Hartmut, Dipl.-Phys.

(56) Entgegenhaltungen:
- EP-A- 0 678 368
- EP-A- 0 836 923
- DE-A- 4 127 621
- DE-A- 19 522 122
- DE-U- 29 917 164
- FR-A- 2 724 343

## Beschreibung

Die Erfindung betrifft ein Werkzeug zum Spritzgießen von Zahnbürstenkörpern aus wenigstens zwei verschiedenen, nacheinander gespritzten Kunststoffkomponenten.

Ein Werkzeug zum Spritzgießen von Zahnbürstenkörpern aus zwei nacheinander gespritzten Kunststoffkomponenten ist aus der EP 0 678-368 A1 bekannt. Es enthält zwei relativ zueinander bewegliche Formteile, die gemeinsam mehrere Gruppen von parallelen Formkavitäten bilden. Eines der Formteile weist für jede Gruppe von Formkavitäten eine Aussparung auf, in die ein Formeinsatz einsetzbar ist. In den Formeinsätzen sind Teilkavitäten ausgebildet, die dem Kopfbereich der Zahnbürstenkörper entsprechen. In zwei von insgesamt vier Gruppen der Formkavitäten wird die erste Kunststoffkomponente und in den beiden übrigen Gruppen die zweite Kunststoffkomponente gespritzt. Nach dem Spritzen der ersten Kunststoffkomponente werden die Formeinsätze mit den daran haftenden Rohlingen aus den Formkavitäten herausgehoben und in die Formkavitäten des anderen Gruppenpaares zum Spritzen der zweiten Kunststoffkomponente eingelegt.

Die Formeinsätze sind am Umfang einer kreisrunden Drehscheibe angeordnet, mittels der die Formeinsätze zwischen den Gruppen von Formkavitäten bewegbar sind. Dadurch ergibt sich für die Formkavitäten eine Anordnung allgemein radial vom Mittelpunkt der Drehscheibe fortweisend. Zwischen den Gruppen von Formkavitäten verbleibt an den Formteilen eine ungenutzte Fläche.

Durch die Erfindung wird eine wesentlich kompaktere Anordnung der Gruppen von Formkavitäten ermöglicht.

Das erfindungsgemäße Werkzeug hat zwei relativ zueinander bewegliche Formteile, die gemeinsam wenigstens zwei Gruppen von parallelen Formkavitäten bilden. Eines der Formteile für jede Gruppe von Formkavitäten weist eine Aussparung auf, in die ein Formeinsatz einsetzbar ist. In den Formeinsätzen sind Teilkavitäten ausgebildet, die dem Kopfbereich der Zahnbürstenkörper entsprechen. In eine erste Gruppe der Formkavitäten wird die erste Kunststoffkomponente gespritzt. In eine weitere Gruppe der Formkavitäten wird die zweite Kunststoffkomponente gespritzt. Die Formkavitäten der ersten Gruppe sind auf der einen und die der zweiten auf der anderen Seite eines drehbaren Tragarmes angeordnet, an dem die Formeinsätze befestigt sind. Die Formkavitäten sind in jeder Gruppe zueinander parallel und mit gleicher Orientierung angeordnet. Die Formkavitäten der ersten Gruppe sind entgegengesetzt zu denen der zweiten Gruppe angeordnet. Die Formkavitäten der ersten Gruppe sind bezüglich des Drehzentrums des Tragarms ausschließlich punktsymmetrisch zu den Formkavitäten der zweiten Gruppe angeordnet.

Die Erfindung ermöglicht es, viele in Gruppen geordnete Formkavitäten platzsparend und zentrumsnah anzuordnen, so daß das Formteil, in dem die Kavitäten gebildet sind, nur eine verhältnismäßig geringe radiale Ausdehnung aufweisen muß. Somit ergibt sich insgesamt eine Reduzierung und eine günstige, zentrumsnahe Verteilung der Masse des Formteils. Die zentrumsnahe Anordnung der Gruppen von Formkavitäten erlaubt zudem eine einfachere Auslegung des Heizkanalsystems. Das Öffnen des Werkzeugs, insbesondere das Anheben des Tragarms mit den daran befestigten Formeinsätzen, wird durch die erfindungsgemäße, kompakte Anordnung der Gruppen von Formkavitäten erleichtert, da aufgrund der Zentrumsnähe der Einsätze keine übermäßigen Hebelkräfte auftreten.

Weitere Merkmale und Vorteile der Erfindung ergeben sich aus der folgenden Beschreibung mehrerer Ausführungsformen und aus den Zeichnungen, auf die Bezug genommen wird. In den Zeichnungen zeigen:
- Figur 1 eine Draufsicht eines Formteils einer ersten Ausführungsform des Werkzeugs;
- Figur 2 einen Schnitt entlang Linie II-II in Figur 1; und
- Figur 3 eine Draufsicht eines Formteils einer zweiten Ausführungsform des Werkzeugs.

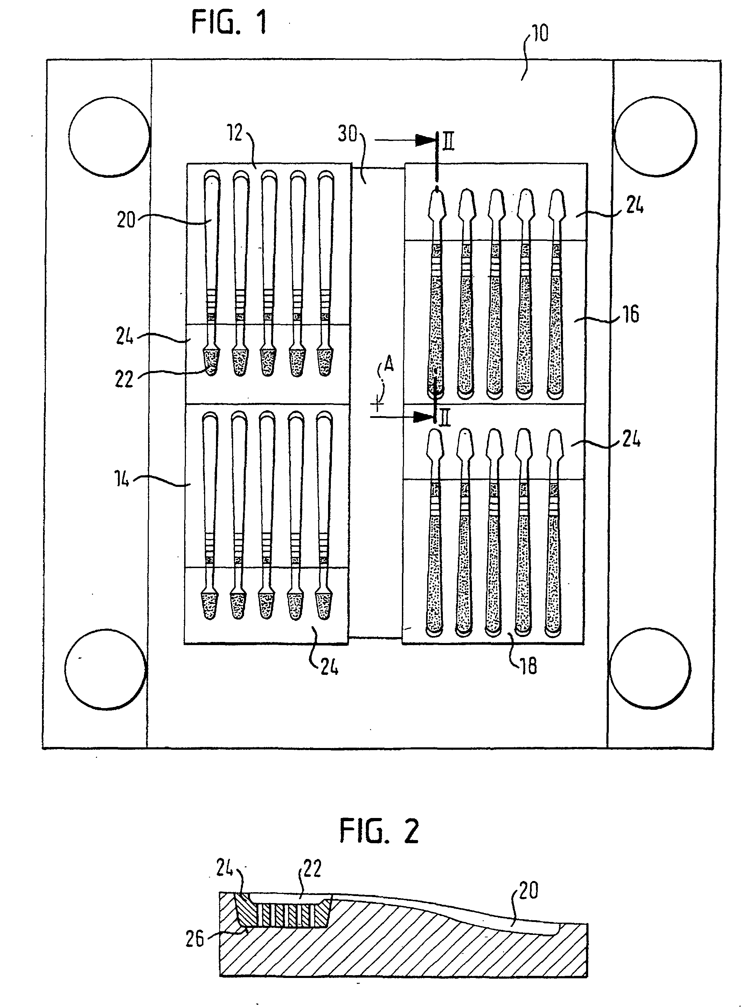

Eine erste Ausführungsform des Werkzeugs zum Spritzgießen von Zahnbürstenkörpern hat zwei relativ zueinander bewegliche Teile, von denen in Figur 1 das untere, mit 10 bezeichnet, in Draufsicht gezeigt ist. Das Werkzeugteil 10 enthält vier Untergruppen von Formkavitäten 12, 14, 16, 18. Jede Untergruppe von Formkavitäten enthält bei der hier gezeigten Ausführungsform fünf parallele Kavitäten in gleicher Orientierung. Wie aus Figur 2 ersichtlich ist, besteht jede Formkavität aus einem ersten, im wesentlichen dem Bürstenstiel entsprechenden Abschnitt 20, und einem zweiten, im wesentlichen dem Bürstenkopf entsprechenden Abschnitt 22. Der Abschnitt 22 ist in einem Formeinsatz 24 gebildet, der in eine Aussparung 26 des Werkzeugteils 10 passend eingesetzt ist.

Das Untergruppenpaar 12, 14 bildet eine erste Gruppe von Formkavitäten, worin die Grundkörper aus einem ersten Kunststoff, beispielsweise Polypropylen, gespritzt werden. Das Untergruppenpaar 16, 18 bildet eine zweite Gruppe von Formkavitäten, worin die in der ersten Gruppe gespritzten Grundkörper mit einem zweiten Kunststoff, beispielsweise einem Elastomer, bereichsweise umspritzt werden. Alle Formkavitäten einer Gruppe sind parallel zueinander angeordnet, jedoch ist die Orientierung der Formkavitäten in der aus den Untergruppen 12, 14 gebildeten ersten Gruppe entgegengesetzt zu der Orientierung der Formkavitäten in der aus dem Untergruppenpaar 16, 18 gebildeten zweiten Gruppe. Innerhalb jeder Gruppe sind die Formkavitäten der einen Untergruppe fluchtend mit denen der anderen Untergruppe angeordnet.

Die Formeinsätze 24 aller vier Untergruppen 12, 14, 16, 18 von Formkavitäten sind an einem gemeinsamen zentralen Tragarm 30 befestigt, der um eine vertikale Achse A drehbar ist. Die Formkavitäten der ersten Gruppe sind auf der einen und die der zweiten auf der anderen Seite des drehbaren Tragarms 30 angeordnet. Die Formkavitäten und auch die Formeinsätze 24 der ersten Gruppe sind in bezug auf die Drehachse A des Tragarms 30 auschließlich punktsymmetrisch zu den Formkavitäten bzw. den Formeinsätzen 24 der zweiten Gruppe angeordnet. "Ausschließlich punktsymmetrisch" bedeutet, daß keine Spiegelsymmetrie und auch keine Kombination von Punkt- und Spiegelsymmetrie vorliegt. Betrachtet man eine imaginäre Front der ersten Gruppe, die durch die Ausrichtung der Formkavitäten bestimmt ist, so ist diese Front an einer entsprechenden Front der zweiten Gruppe vorbeigerichtet, wobei die Drehachse A des Tragarms zwischen den beiden Fronten liegt.

Nach demselben geometrischen Ordnungsprinzip kann auf jeder Seite des Tragarms 30 auch mehr als eine Gruppe von Formkavitäten angeordnet werden.

Der Tragarm 30 mit den daran befestigten Formeinsätzen 24 ist sowohl um die Achse A drehbar, als auch in Richtung dieser Achse verschiebbar. Bei geöffnetem Werkzeug werden die Formeinsätze 24 angehoben, die in den Untergruppen 16, 18 fertiggespritzten Bürstenkörper werden ausgeworfen, und die gleichzeitig in den Untergruppen 12, 14 gespritzten Grundkörper werden angehoben, durch Drehung des Tragarms 30 um 180° umgesetzt und dann in die Formkavitäten der Untergruppen 16, 18 eingelegt. Während in den Formkavitäten der Untergruppen 12, 14 der nächste Satz von Grundkörpern gespritzt wird, werden in den Formkavitäten der Untergruppen 16, 18 die darin eingelegten Grundkörper mit der zweiten Kunststoffkomponente umspritzt.

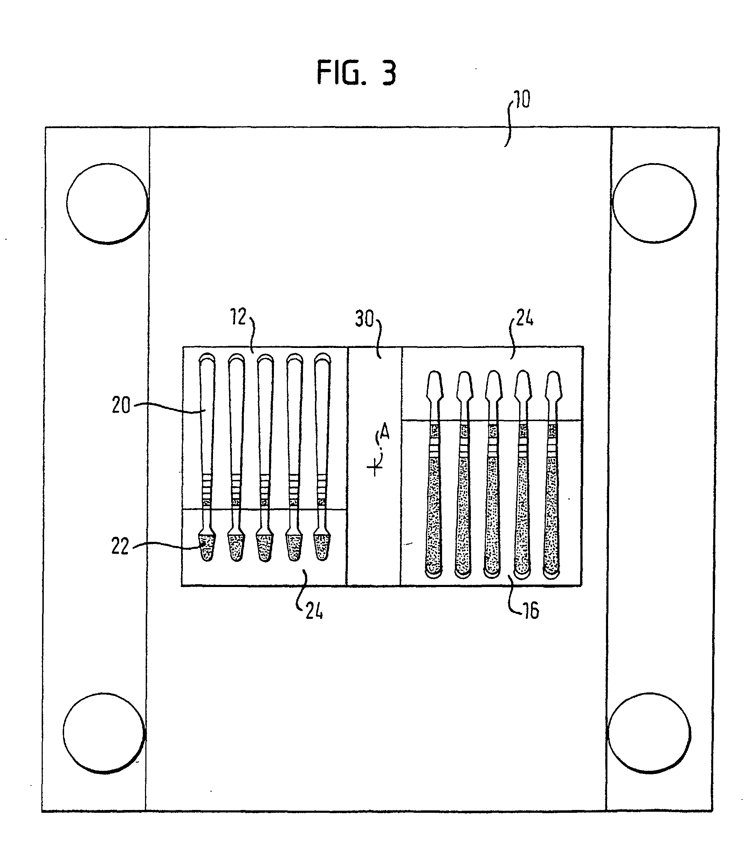

Eine zweite Ausführungsform des Werkzeugs zum Spritzgießen von Zahnbürstenkörpern, von dem in Figur 3 entsprechend der Ansicht der Figur 1 das untere Formteil 10 gezeigt ist, unterscheidet sich von der ersten Ausführungsform lediglich dadurch, daß die Gruppen von Formkavitäten nicht aus Untergruppenpaaren gebildet sind. Die anderen Komponenten des Werkzeugs sowie deren Funktionen entsprechen denen der ersten Ausführungsform und sind mit den gleichen Bezugszeichen versehen.

Neben den bereits eingangs erwähnten Vorteilen ergibt sich insbesondere bei dieser Ausführungsform eine vereinfachte Wartung, da die Formeinsätze besonders leicht zugänglich sind und wie Kassetten ausgewechselt werden können.

## Patentansprüche

1. Werkzeug zum Spritzgießen von Zahnbürstenkörpern aus wenigstens zwei verschiedenen, nacheinander gespritzten Kunststoffkomponenten, mit zwei relativ zueinander beweglichen Formteilen (10), die gemeinsam wenigstens zwei Gruppen (12, 14; 16, 18) von parallelen Formkavitäten bilden, wobei
- eines der Formteile (10) für jede Gruppe (12, 14; 16, 18) von Formkavitäten eine Aussparung (26) aufweist, in die ein Formeinsatz (24) einsetzbar ist,
- in den Formeinsätzen (24) Teilkavitäten ausgebildet sind, die dem Kopfbereich der Zahnbürstenkörper entsprechen,
- in eine erste Gruppe (12, 14) der Formkavitäten die erste Kunststoffkomponente gespritzt wird,
- in eine weitere Gruppe (16, 18) der Formkavitäten die zweite Kunststoffkomponente gespritzt wird;
**dadurch gekennzeichnet, daß**
a) die Formkavitäten der ersten Gruppe (12, 14) auf der einen und die der zweiten (16, 18) auf der anderen Seite eines drehbaren Tragarmes (30) angeordnet sind, an dem die Formeinsätze (24) befestigt sind;
b) die Formkavitäten in jeder Gruppe (12, 14; 16, 18) zueinander parallel und mit gleicher Orientierung angeordnet sind;
c) die Formkavitäten der ersten Gruppe (12, 14) entgegengesetzt zu denen der zweiten Gruppe (16, 18) angeordnet sind; und
d) die Formkavitäten der ersten Gruppe (12, 14) bezüglich des Drehzentrums des Tragarms (30) ausschließlich punktsymmetrisch zu den Formkavitäten der zweiten Gruppe (16, 18) angeordnet sind.

2. Werkzeug nach Anspruch 1, **dadurch gekennzeichnet, daß** jede Gruppe aus einem Untergruppenpaar (12, 14; 16, 18) gebildet ist.

3. Werkzeug nach Anspruch 2, **dadurch gekennzeichnet, daß** in jedem Untergruppenpaar (12, 14; 16, 18) die Formkavitäten der einen Untergruppe (12; 16) fluchtend mit den Formkavitäten der anderen Untergruppe (14, 18) angeordnet sind.

## Claims

1. A tool for injection molding of toothbrush bodies of at least two different, consecutively injection molded plastic components, comprising a pair of mold parts (10) that can be moved relative to each other and that together constitute at least two groups (12, 14; 16, 18) of parallel mold cavities,
- one of the mold parts (10) having a recess (26) for each group (12, 14; 16, 18) of mold cavities, a mold insert (24) being insertable into the recess,
- partial cavities being formed in the mold inserts (24), corresponding to the head portions of the toothbrush bodies,
- the first plastic component being injected into a first group (12, 14) of mold cavities,
- the second plastic component being injected into a further group (16, 18) of mold cavities;
**characterized in that**
a) the mold cavities of the first group (12, 14) are arranged on the one side and those of the second group (16, 18) on the other side of a rotatable carrier arm (30) to which the mold inserts (24) are attached;
b) the mold cavities in each group (12, 14; 16, 18) are arranged parallel to each other and so as to have the same orientation;
c) the mold cavities of the first group (12, 14) are arranged so as to lie opposite to those of the second group (16, 18); and
d) the mold cavities of the first group (12, 14) are arranged, with respect to the axis of the carrier arm (30), so as to be exclusively point-symmetric to the mold cavities of the second group (16, 18).

2. The tool according to Claim 1, **characterized in that** each group is constituted by a pair of subgroups (12, 14; 16, 18).

3. The tool according to Claim 2, **characterized in that** in each pair of subgroups (12, 14; 16, 18) the mold cavities of the one subgroup (12; 16) are arranged in alignment with the mold cavities of the other subgroup (14, 18).

## Revendications

1. Outil de moulage par injection de corps de brosses à dents en au moins deux différents composants de matière plastique injectés l'un après l'autre, comportant deux parties de moule (10) mobiles l'une par rapport à l'autre, qui forment ensemble au moins deux groupes (12, 14 ; 16, 18) de cavités parallèles de moule,
- une des parties de moule (10) présentant pour chaque groupe (12, 14 ; 16, 18) de cavités de moule un évidement (26) dans lequel peut être inséré un insert de moule (24),
- des cavités partielles, qui correspondent à la région de tête des corps de brosses à dents, étant réalisées dans les inserts de moule (24)
- le premier composant de matière plastique étant injecté dans le premier groupe (12, 14) des cavités de moule,
- le premier composant de matière plastique étant injecté dans le premier groupe (12, 14) des cavités de moule,
- le deuxième composant de matière plastique étant injecté dans un autre groupe (16, 18) des cavités de moule,
**caractérisé en ce que**
a) les cavités de moule du premier groupe (12, 14) sont agencées d'un côté, et celles du deuxième groupe (16, 18) de l'autre côté d'un bras porteur rotatif (30) sur lequel les inserts de moule (24) sont fixés ;
b) les cavités de moule dans chaque groupe (12, 14 ; 16, 18) sont agencées parallèlement les unes aux autres et avec la même orientation ;
c) les cavités de moule du premier groupe (12, 14) sont agencées en tête-bêche par rapport à celles du deuxième groupe (16 ; 18) ; et
d) par rapport au centre de rotation du bras porteur (30), les cavités de moule du premier groupe (12, 14) sont agencées exclusivement à symétrie ponctuelle par rapport aux cavités de moule du deuxième groupe (16, 18).

2. Outil selon la revendication 1, **caractérisé en ce que** chaque groupe est formé par une paire de sous-groupes (12, 14; 16, 18).

3. Outil selon la revendication 2, **caractérisé en ce que** dans chaque paire de sous-groupes (12, 14 ; 16, 18), les cavités de moule d'un sous-groupe (12 ; 16) sont agencées en alignement sur les cavités de moule de l'autre sous-groupe (14 ; 18).
